# EUROPEAN PATENT APPLICATION

(11) **EP 2 421 269 A2**
(43) Date of publication of application: **22.02.2012**
(21) Application number: 11159844.7
(22) Date of filing: 25.03.2011
(51) Int. Cl.: H04N 13/00

(54) **Method and apparatus for adjusting 3D video images**

(30) Priority: 16.08.2010 TW 99127261
(71) Applicant: Acer Incorporated, Taipei County 221 (TW)
(72) Inventor: Su, Chen-Kang, 221, Taipei (TW); Chen, Hsin-Yu, 221, Taipei (TW)
(74) Representative: Michalski Hüttermann & Partner Patentanwälte

(57) **Abstract**

A method for adjusting 3D video images is provided. The method includes the steps of : receiving a 3D video, wherein the 3D video includes a plurality of frames, and each frame includes a plurality of image blocks; obtaining a binocular parallax value between a left eye image and a right eye image which related to each other in the 3D video; calculating displacement of each image block based on the locations of the same image block in the different frames and calculating the image complexity of the 3D video based on the displacements of the image blocks of the frames; converting the 3D video into a 2D video and displaying the 2D video when the image complexity is greater than a predetermined value, and adjusting the definition of depth of each image block in each frame of the 2D video, and displaying the 3D video when the image complexity is lower than the predetermined value, and adjusting the binocular parallax of each image block of each frame of the 3D video according the image complexity of the 3D video.

## Description

### CROSS REFERENCE TO RELATED APPILCATIONS

This Non-provisional application claims priority under 35 U.S.C. §119(a) on Patent Application No(s). 99127261, filed in Taiwan, Republic of China on Aug. 16, 2010, the entire contents of which are hereby incorporated by reference.

### BACKGROUND OF THE INVENTION

### Field of the Invention

The present invention relates to 3D image processing technology, and in particular relates to a method and apparatus for adjusting 3D video images in order to prevent viewers from motion sickness.

### Description of the Related Art

Binocular parallax helps to create depth perception for humans, and 3D displays employ the binocular parallax phenomenon for 3D viewing.

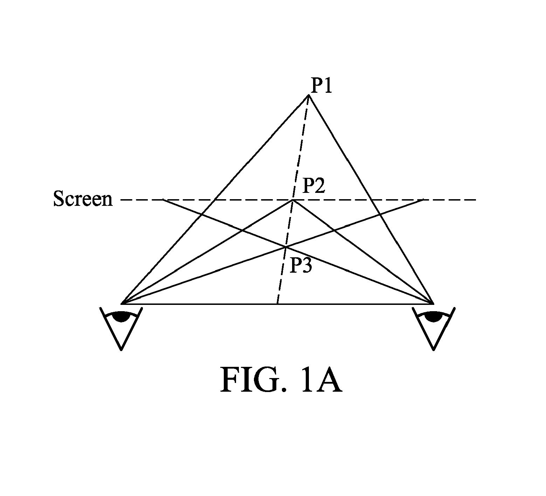

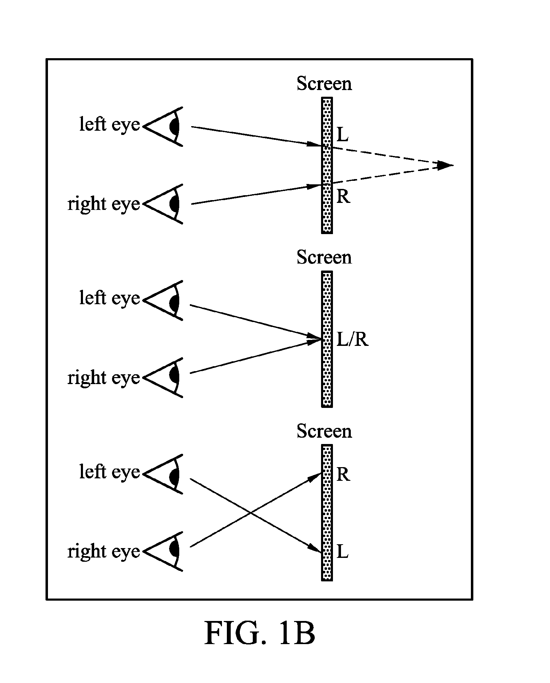

Figs. 1A and 1B are diagrams illustrating a binocular parallax. When human eyes focus on a point P2 of a screen, the binocular parallax is zero. However, when human eyes focus on a point P1 of the screen, the binocular parallax is positive (so-called positive parallax), and when human eyes focus on a point P3 of the screen, the binocular parallax is negative (so-called negative parallax). The positive and negative parallax can respectively create a concaved image and a protruding image in the human visual system.

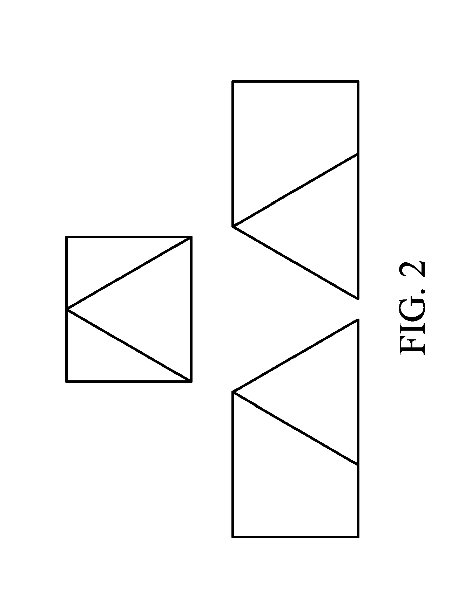

Fig. 2 is a diagram illustrating a 3D display technique. For the current 3D display technique, the left image (as shown in the bottom left part in Fig. 2) and the right image (as shown in bottom right part in Fig. 2) related to each other, are created based on an original 2D image (as shown in upper part in Fig. 2) and have basically identical image contents. However, some objects (e.g., the location of triangular objects in the bottom part of Fig. 2) are different from that in the top part of Fig. 2. In Fig. 2, moving the triangular object in the left image rightward from the cube and moving the triangular object in the right image leftward from the cube creates a negative parallax and makes a viewer feel that the triangular object is closer than the cube. A positive parallax can be achieved in an opposite manner.

Although 3D display techniques allow users to have unique experiences, continuously viewing a 3D display may make a viewer feel sick due to motion sickness. Thus, having motion sickness may ruin the experience of watching a 3D video for users. Therefore, a new method for adjusting the images of a 3D video is needed.

### BRIEF SUMMARY OF THE INVENTION

The present invention provides a method for adjusting 3D video images, which comprises the steps of: receiving a 3D video, wherein the 3D video comprises a plurality of frames, and each frame comprises a plurality of image blocks; calculating displacement of each image block based on the locations of the same image block in the different frames and calculating the image complexity of the 3D video based on the displacements of the image blocks in the frames; converting the 3D video into a 2D video and displaying the 2D video when the image complexity is greater than a predetermined value, and displaying the 3D video when the image complexity is lower than the predetermined value.

The present invention also provides a method for adjusting 3D video images, which comprises the steps of : receiving a 3D video, wherein the 3D video comprises a plurality of frames, and each frame comprises a plurality of image blocks; obtaining a binocular parallax value between a left eye image and a right eye image which related to each other in the 3D video; calculating displacement of each image block based on the locations of the same image block in the different frames and calculating the image complexity of the 3D video based on the displacements of the image blocks of the frames; converting the 3D video into a 2D video and displaying the 2D video when the image complexity is greater than a predetermined value, and adjusting the definition of depth of each image block in each frame of the 2D video, and displaying the 3D video when the image complexity is lower than the predetermined value, and adjusting the binocular parallax of each image block of each frame of the 3D video according the image complexity of the 3D video.

The present invention also provides an apparatus for adjusting 3D video images, which comprises an image receiving unit for receiving a 3D video, wherein the 3D video comprises a plurality of frames, and each frame comprises a plurality of image blocks; an image complexity calculating unit, coupled to the image receiving unit, for calculating displacement of each image block based on the locations of the same image block in the different frames and calculating the image complexity of the 3D video based on the displacements of the image blocks of the frames; a 2D display unit, coupled to the image complexity unit, for converting the 3D video into a 2D video and displaying the 2D video when the image complexity is greater than a predetermined value; and a 3D display unit, coupled to the image complexity unit, for displaying the 3D video when the image complexity is lower than the predetermined value.

A detailed description is given in the following embodiments with reference to the accompanying drawings.

### BRIEF DESCRIPTION OF THE DRAWINGS

The present invention can be more fully understood by reading the subsequent detailed description and examples with references made to the accompanying drawings, wherein:

Figs. 1A and 1B are diagrams illustrating a binocular parallax.

Fig. 2 is a diagram illustrating a 3D display technique.

Fig. 3 is flowchart of the method for adjusting 3D video images according to an embodiment of the present invention.

Fig. 4 is the structure of the 3D video in an embodiment.

Fig. 5 shows the left eye image n/L which is divided into image blocks with 3×3 pixels.

Fig. 6A is an original diagram, while Fig. 6B is a z-plane diagram representing the original diagram by using gray levels 0~255.

Fig. 7 is flowchart of a method for adjusting the definition of depth in a 2D video.

Fig. 8A is a diagram showing a method of adjusting binocular parallax linearly inversely proportional to the image complexity.

Fig. 8B is a diagram showing a method of adjusting binocular parallax nonlinearly inversely proportional to the image complexity where the straight line in Fig.8A is replaced by an S-curve.

Fig. 9 is a schematic diagram of the apparatus 900 for adjusting the 3D video image according to an embodiment of the present invention.

### DETAILED DESCRIPTION OF THE INVENTION

The following description is of the best-contemplated mode of carrying out the invention. This description is made for the purpose of illustrating the general principles of the invention and should not be taken in a limiting sense. The scope of the invention is best determined by reference to the appended claims.

The present invention provides a new method for adjusting 3D video images, to enhance the 3D video experience of viewers. The purpose of the present invention is to lower the stereo effect created by the 3D video and convert the 3D video to a 2D video when the 3D video becomes excessively complicated, and enhance the stereo effect created by the 3D video image when the 3D video becomes excessively quiet.

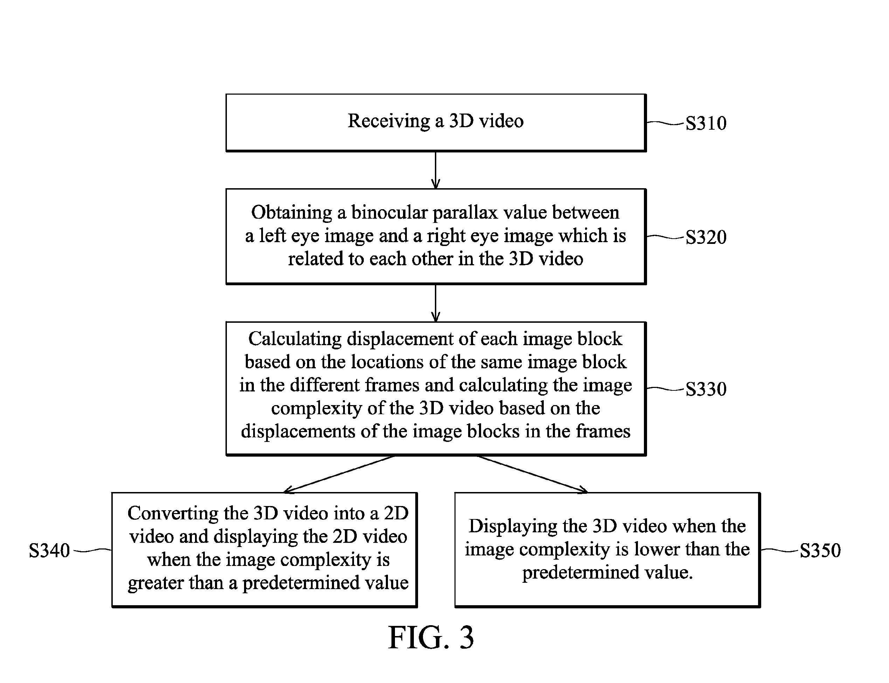

Fig. 3 is flowchart of the method for adjusting 3D video images according to an embodiment of the present invention. The method 300 for adjusting 3D video images comprises the steps of S310∼S350, which are described as follows:

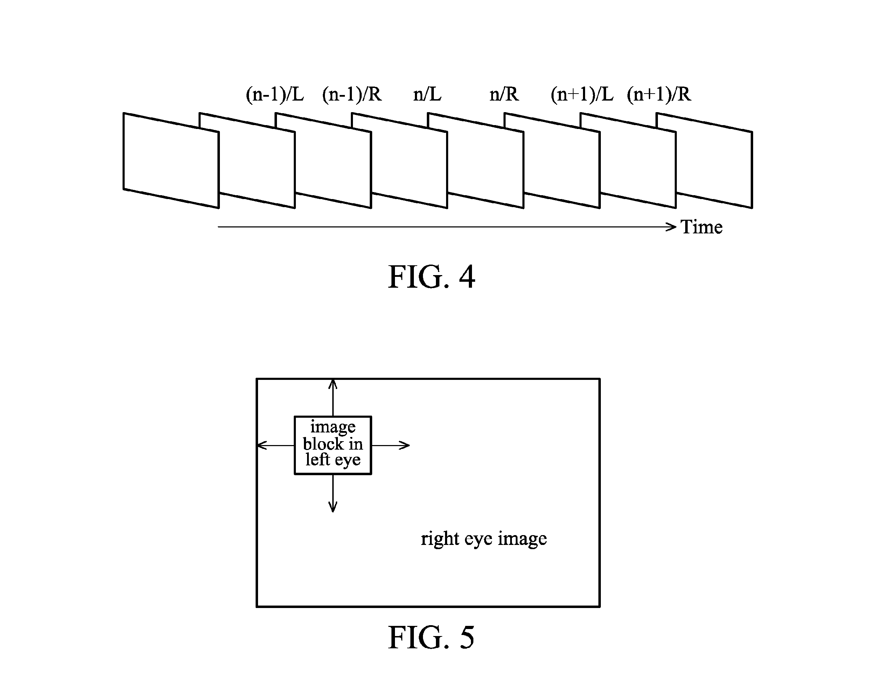

In step S310, a 3D video is first received. Fig. 4 is the structure of the 3D video in an embodiment. The 3D video comprises a plurality of frames (e.g., (n-1)/L, (n-1)/R, n/L, n/R, (n+1)/L, (n+1) /R), wherein the symbols "/L" and "/R" respectively indicate a left eye image and right eye image which are related to each other. Each frame further comprises a plurality of image blocks, which will be described latter.

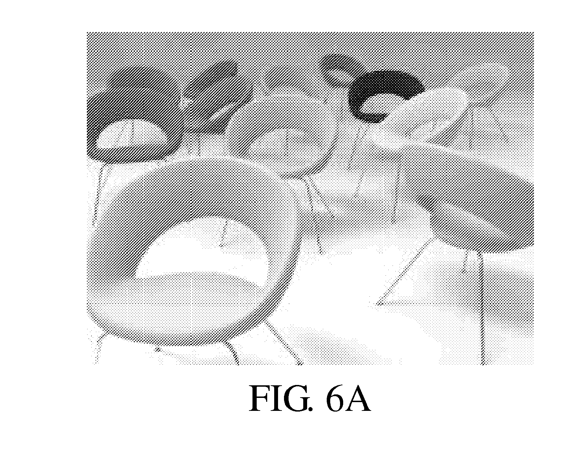

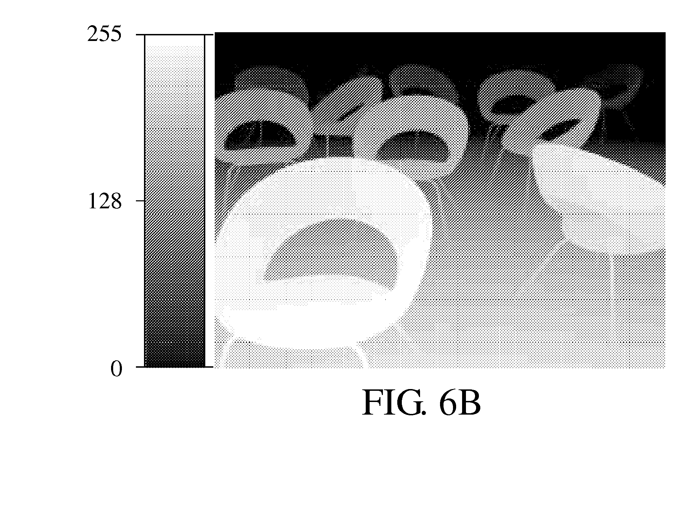

In step S320, a binocular parallax value of each image block of a frame based on the related left eye image (e.g., n/L) and right eye (e.g., n/R) image in the 3D video is obtained. In an embodiment, an image correlation technique may be employed to obtain the binocular parallax. For example, the left eye image n/L is divided into image blocks with 3×3 pixels, and each image block are then compared with the right eye image n/R (as shown in Fig. 5) by scanning the right eye image n/R. The scanning process stops when a same image block in the right eye image n/R is found. When scanning, the displacement y of the image block between its original location and final location is called a "binocular parallax" of the image block. In this embodiment, when the binocular parallax y=0, it means that the image block is a zero parallax. When the binocular parallax y>0, it means that the image block is a positive parallax. When the binocular parallax y<0, it means that the image block is a negative parallax. Figs. 6A and 6B illustrate the image blocks and their binocular parallax. Fig. 6A is an original diagram, while Fig. 6B is a z-plane diagram representing the original diagram by using gray levels 0~255. The image blocks of the gray level 128 are zero parallax image blocks, while the image blocks of a gray level higher or lower than the gray level 128 are respectively negative parallax or positive parallax image blocks.

In step S330, the displacement of the image block based on the location of the same image block in the different frames and the image complexity of the 3D video based on the displacements of the image blocks of the frames are calculated. In an embodiment, the image correlation technique can be employed to calculate the image blocks. Note that, to calculate the binocular parallax, the right and left eye images which are related to each other (for example, left eye image n/L and right eye image n/R) and usually displayed in order are compared with each other. However, to calculate the displacements of the image block (to estimate the change of the image block), the image blocks of two adjacent left images (or two adjacent right images) are compared with each other. For example, to find the image block which is the same as the image block of the left eye image n/L, the present invention will scan a next left eye image (n+1)_L. When finding a same (or similar) image block in the next left eye image (n+1)_L, the location of the image blocks in different images are compared and the displacement m of the image blocks are calculated. Note that the present invention should not be limited thereto. After obtaining the displacements of all of the image blocks of a 3D video, the present invention may further sum up or average all of the displacements to calculate the image complexity of the 3D video. Those skilled in the art may employ various algorithms to perform the calculating processes, which will not be further discussed here.

Then, the method of the present invention further compares the image complexity of the 3D video with a predetermined value to determine the manner of display of the 3D video. In step S340, when the image complexity is greater than the predetermined value, the method coverts the 3D video into a 2D video and displays the 2D video. In step S350, when the image complexity is lower than the predetermined value, the method displays the 3D video. Specifically, the 3D video should be converted into a 2D video when the image content in the 3D video varies severely, and should keep displaying a 3D video when the image content in the 3D video is basically unchanged. The step of converting the 3D video into a 2D video, for example, further comprises zeroing the binocular parallax value of all of the image blocks in all of the frames of the 3D video. This means that the left eye image and right eye images will be adjusted to be identical to each other. Those skilled in the art can set the predetermined value to achieve their own customized video quality according to their own experiences or preferences.

However, the converted 2D video in step S340 may be monotonous, and the converted and unconverted frames may not coordinate with each other. Therefore, the present invention further adjusts the definition of the depth of each image block in each frame of the 2D video. Note that the binocular parallax producing depth perception is a 3D image display technique. Adjusting the definition of depth means respectively increasing or decreasing the definition of the foreground, middle ground or background of one image in different manners. Although the adjusting definition of depth may also create the stereo effect, it still belongs to a 2D display technique.

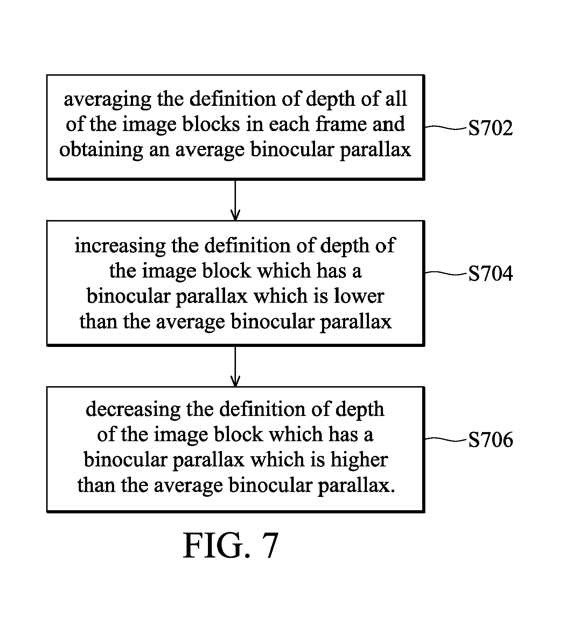

Fig. 7 is flowchart of a method for adjusting the definition of depth in a 2D video. The method 700 for adjusting the definition of depth comprises: in step S702, averaging the definition of depth of all of the image blocks in each frame and obtaining an average binocular parallax yₐᵥ; in step S704, increasing the definition of depth of the image block which has a binocular parallax which is lower than the average binocular parallax yₐᵥ; and in step S706, decreasing the definition of depth of the image block which has a binocular parallax which is higher than the average binocular parallax yₐᵥ. The averaged binocular parallax yₐᵥ can be used to distinguish a foreground from a background of a frame. Through step S704, the definition of the foreground may be sharpening, and through step S706, the background may be blurred so that a 2D video having a clear foreground and background can be viewed.

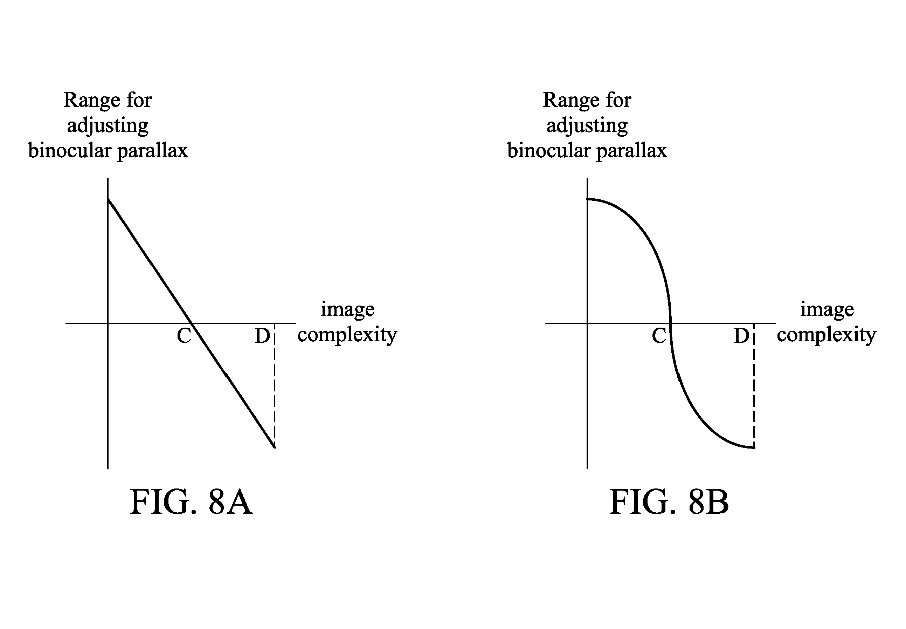

In step S350, the method of the present invention can further display the 3D video in a manner different than that in prior art. The present invention further adjusts the binocular parallax of each of the image blocks of each frame of the 3D video according the image complexity of the 3D video, where the binocular parallax is adjusted inversely proportional to the image complexity of the 3D video. Fig. 8A is a diagram showing a method of adjusting binocular parallax linearly inversely proportional to the image complexity, while Fig. 8B is a diagram showing a method of adjusting binocular parallax nonlinearly inversely proportional to the image complexity where the straight line in Fig. 8A is replaced by an S-curve. In these two methods, when the image complexity of an image is higher than a predetermined value (right sides of the point C in Figs. 8A and 8B), the positive parallax and the negative parallax of the image are both decreased. When the image complexity of an image is lower than a predetermined value (left sides of the point C in Figs. 8A and 8B), the positive parallax and the negative parallax of the image are both increased. The purpose of step S350 is to dynamically adjust the depth sense created by the 3D video. In other words, when the image becomes excessively complicated, the present invention will ease the feeling of motion sickness by viewers by lowering the stereo sense created by the image and when the image becomes excessively quiet, the present invention will enhance the stereo sense. Note that, when the present invention detects that the image complexity has exceeded a maximum value (point D in Figs 8A and 8B), the binocular parallax of both the left and right eye images will be zeroed, which was discussed previously. Those skilled in the art may employ proper algorithms to adjust the binocular parallax of the image block in the 3D video, and the present invention is not limited thereto.

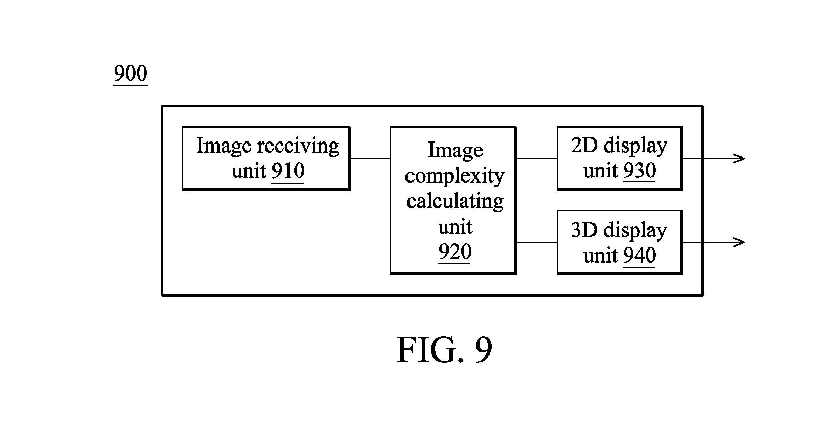

In addition to the method for adjusting 3D video images, the present invention further provides an apparatus for adjusting the 3D video image. Fig. 9 is a schematic diagram of the apparatus 900 for adjusting the 3D video image according to an embodiment of the present invention. The apparatus of the present invention 900 comprises: an image receiving unit 910 for receiving a 3D video, wherein the 3D video comprises a plurality of frames, and each frame comprises a plurality of image blocks; an image complexity calculating unit 920, coupled to the image receiving unit 910, for calculating displacement of each image block based on the locations of the same image block in the different frames; calculating the image complexity of the 3D video based on the displacements of the image blocks of the frames; a 2D display unit 930, coupled to the image complexity unit 920, for converting the 3D video into a 2D video and displaying the 2D video when the image complexity is greater than a predetermined value; and a 3D display unit 940, coupled to the image complexity unit 920, for displaying the 3D video when the image complexity is lower than the predetermined value. The apparatus 900 for adjusting 3D video images of the present invention can perform the aforementioned method for adjusting 3D video images, and will not be further discussed for brevity.

While the invention has been described by way of example and in terms of the preferred embodiments, it is to be understood that the invention is not limited to the disclosed embodiments. To the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A method for adjusting 3D video images, comprising the steps of:
receiving a 3D video, wherein the 3D video comprises a plurality of frames, and each frame comprises a plurality of image blocks;
calculating displacement of each image block based on the locations of the same image block in the different frames and calculating the image complexity of the 3D video based on the displacements of the image blocks in the frames;
converting the 3D video into a 2D video and displaying the 2D video when the image complexity is greater than a predetermined value, and
displaying the 3D video when the image complexity is lower than the predetermined value.

2. The method for adjusting 3D video images as claimed in claim 1 further comprises:
obtaining a binocular parallax value between a left eye image and a right eye image which is related to each other in the 3D video.

3. The method for adjusting 3D video images as claimed in claim 2,
wherein the step of converting the 3D video into the 2D video further comprises:
zeroing the binocular parallax value of all of the image blocks in all of the frames of the 3D video.

4. The method for adjusting 3D video images as claimed in claim 3,
wherein the step of displaying the 2D video further comprises:
adjusting the definition of depth of each image block in each frame of the 2D video.

5. The method for adjusting 3D video images as claimed in claim 4,
wherein the step of adjusting the definition of depth of each image block in each frame of the 2D video further comprises:
averaging the definition of depth of all of the image blocks in each frame and obtaining an average binocular parallax;
increasing the definition of depth of the image block which has a binocular parallax which is lower than the average binocular parallax; and
decreasing the definition of depth of the image block which has a binocular parallax which is higher than the average binocular parallax.

6. The method for adjusting 3D video images as claimed in claim 2,
wherein the step of displaying the 3D video further comprises:
adjusting the binocular parallax of each image block of each frame of the 3D video according the image complexity of the 3D video.

7. A method for adjusting 3D video images, comprising the steps of:
receiving a 3D video, wherein the 3D video comprises a plurality of frames, and each frame comprises a plurality of image blocks;
obtaining a binocular parallax value between a left eye image and a right eye image which related to each other in the 3D video;
calculating displacement of each image block based on the locations of the same image block in the different frames and calculating the image complexity of the 3D video based on the displacements of the image blocks of the frames;
converting the 3D video into a 2D video and displaying the 2D video when the image complexity is greater than a predetermined value, and adjusting the definition of depth of each image block in each frame of the 2D video, and
displaying the 3D video when the image complexity is lower than the predetermined value, and adjusting the binocular parallax of each image block of each frame of the 3D video according the image complexity of the 3D video.

8. The method for adjusting 3D video images as claimed in claim 7,
wherein the step of adjusting the definition of depth of all of the image blocks in all of the frames of the 2D video further comprises:
averaging the definition of depth of all of the image blocks in each frame and obtaining an average binocular parallax;
increasing the definition of depth of the image block which has a binocular parallax which is lower than the average binocular parallax; and
decreasing the definition of depth of the image block which has a binocular parallax which is higher than the average binocular parallax.

9. An apparatus for adjusting 3D video images, comprising:
an image receiving unit for receiving a 3D video, wherein the 3D video comprises a plurality of frames, and each frame comprises a plurality of image blocks;
an image complexity calculating unit, coupled to the image receiving unit, for calculating displacement of each image block based on the locations of the same image block in the different frames and calculating the image complexity of the 3D video based on the displacements of the image blocks of the frames;
a 2D display unit, coupled to the image complexity unit, for converting the 3D video into a 2D video and displaying the 2D video when the image complexity is greater than a predetermined value; and
a 3D display unit, coupled to the image complexity unit, for displaying the 3D video when the image complexity is lower than the predetermined value.

10. The apparatus for adjusting 3D video images as claimed in claim 9,
wherein the image complexity calculating unit further obtains a binocular parallax value between a left eye image and a right eye image which are related to each other in the 3D video.

11. The apparatus for adjusting 3D video images as claimed in claim 10, wherein the 2D display unit further zeros the binocular parallax value of all of the image blocks in all of the frames of the 3D video.

12. The apparatus for adjusting 3D video images as claimed in claim 11, wherein the 2D display unit adjusts the definition of depth of each image block in each frame of the 2D video.

13. The apparatus for adjusting 3D video images as claimed in claim 12, wherein the 2D display unit further:
averages the definition of depth of all of the image blocks in each frame to obtain an average binocular parallax;
increases the definition of depth of the image block which has a binocular parallax which is lower than the average binocular parallax; and
decreases the definition of depth of the image block which has a binocular parallax which is higher than the average binocular parallax.

14. The apparatus for adjusting 3D video images as claimed in claim 12, wherein the 3D display unit further adjusts the binocular parallax of each image block of each frame of the 3D video according the image complexity of the 3D video.
